# EUROPEAN PATENT APPLICATION

(11) **EP 3 173 954 A1**
(43) Date of publication of application: **31.05.2017**
(21) Application number: 16196681.7
(22) Date of filing: 01.11.2016
(51) Int. Cl.: G06F 17/50, G06F 17/30, G06K 9/00, G06T 7/50, G06T 17/00

(54) **MODELING PROCESSING SYSTEM, METHOD OF EXECUTING MODELING PROCESSING, AND CARRIER MEANS**

(30) Priority: 02.11.2015 JP 2015215550; 12.10.2016 JP 2016200738
(71) Applicant: Ricoh Company, Ltd., Tokyo 143-8555 (JP)
(72) Inventor: MAEDA, Hiroshi, Ohta-ku, Tokyo 143-8555 (JP); YUKUMOTO, Reiji, Ohta-ku, Tokyo 143-8555 (JP); KOBAYASHI, Koji, Ohta-ku, Tokyo 143-8555 (JP); YUJI, Yasuaki, Ohta-Ku, Tokyo 143-8555 (JP); FEI, Yang, Ohta-ku, Tokyo 143-8555 (JP); ISHII, Shigeyuki, Ohta-ku, Tokyo 143-8555 (JP)
(74) Representative: Watkin, Timothy Lawrence Harvey

(57) **Abstract**

A modeling processing system is provided. The modeling processing system includes an acquisition unit (30), a memory (31), and a searching unit (32). The acquisition unit (30) acquires information on a surface profile of a target three-dimensional object from a reading unit (33). The target three-dimensional object is a target for a modeling processing. The memory (31) stores, for a plurality of modeled objects, a plurality of modeled object information, and each modeled object information includes surface profile information and internal structure information of the modeled object. The searching unit (32) specifies, from among the plurality of modeled object information stored in the memory (31), at least one of the plurality of modeled object information based on the information on the surface profile of the target three-dimensional object acquired by the acquisition unit (30), as a candidate modeled object information for the modeling processing.

## Description

### BACKGROUND

### Technical Field

The present disclosure relates to a modeling processing system, a modeling processing method, and a carrier means.

### Description of the Related Art

Three-dimensional (hereinafter "3D") printers are configured to create various three-dimensional objects using 3D model data. 3D model data is generally created with a software program such as a CAD (computer-aided design) system. A 3D printer creates a desired object as 3D model data created with a CAD system, etc. is input in the 3D printer.

JP-2012-101446-A discloses a modeling technology which involves creating 3D model data by a 3D scanner, converting the format of the 3D model data into another format readable by a 3D printer, and inputting the converted data into a 3D printer to cause the 3D printer to create a modeled object.

The 3D scanner is capable of acquiring the surface profile of a target three-dimensional object, but incapable of acquiring the inner structure thereof. Therefore, in a case in which the target three-dimensional object has its feature inside thereof, the 3D scanner cannot reproduce the feature of the three-dimensional object.

There is a need for a system or method which can create a modeled object in which the feature, including the inner feature, of a target three-dimensional object is reproduced.

### SUMMARY

In accordance with some embodiments of the present invention, a modeling processing system is provided which can create a modeled object in which the feature, including the inner feature, of a target three-dimensional object is reproduced. The modeling processing system includes an acquisition unit, a memory, and a searching unit. The acquisition unit acquires information on a surface profile of a target three-dimensional object from a reading unit. The target three-dimensional object is a target for a modeling processing. The memory stores, for a plurality of modeled objects, a plurality of modeled object information, and each modeled object information includes surface profile information and internal structure information of the modeled object. The searching unit specifies, from among the plurality of modeled object information stored in the memory, at least one of the plurality of modeled object information based on the information on the surface profile of the target three-dimensional object acquired by the acquisition unit, as a candidate modeled object information for the modeling processing.

In accordance with some embodiments of the present invention, a method of executing a modeling processing is provided. The method includes acquiring information on a surface profile of a target three-dimensional object from a reading unit. The target three-dimensional object is a target for a modeling processing. The method further includes storing in a memory, for a plurality of modeled objects, a plurality of modeled object information, and each modeled object information includes surface profile information and internal structure information of the modeled object. The method further includes specifying, from among the plurality of modeled object information stored in the memory, at least one of the plurality of modeled object information based on the information on the surface profile of the target three-dimensional object, as a candidate modeled object information for the modeling processing.

In accordance with some embodiments of the present invention, a carrier means is provided. The carrier means carries computer readable code for controlling one or more computers to carry out the above method.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram of a modeling processing system according to an embodiment of the present invention;
FIG. 2 is a hardware diagram of a 3D model data server according to an embodiment of the present invention;
FIG. 3 is a functional block diagram of a modeling processing system according to a first embodiment of the present invention;
FIG. 4 is an illustration of 3D scanned data according to an embodiment of the present invention;
FIG. 5 is a flowchart of a modeling processing executed by the modeling processing system according to the first embodiment;
FIG. 6 is an illustration of a screen for presenting specified 3D model data to a user;
FIG. 7 is an illustration of a screen for presenting multiple candidate 3D model data to a user;
FIG. 8 is a functional block diagram of a modeling processing system according to a second embodiment of the present invention;
FIG. 9 is a table listing measurement information;
FIG. 10 is a flowchart of a first example processing for specifying 3D model data according to an embodiment of the present invention;
FIG. 11 is a flowchart of a second example processing for specifying 3D model data according to an embodiment of the present invention;
FIG. 12 is a flowchart of a third example processing for specifying 3D model data according to an embodiment of the present invention;
FIG. 13 is a flowchart of a fourth example processing for specifying 3D model data according to an embodiment of the present invention;
FIG. 14 is a flowchart of a fifth example processing for specifying 3D model data according to an embodiment of the present invention; and
FIG. 15 is a flowchart of a sixth example processing for specifying 3D model data according to an embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

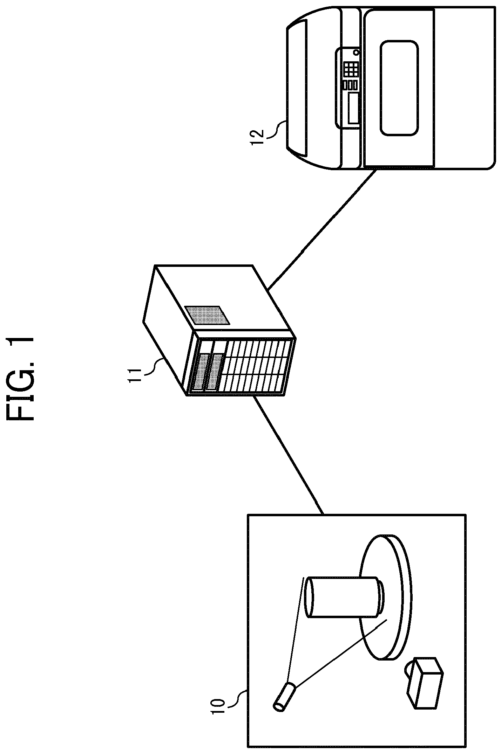

FIG. 1 is a schematic diagram of a modeling processing system for executing a modeling processing according to an embodiment of the present invention. The modeling processing system illustrated in FIG. 1 includes a reading device 10, an information processing device 11, and a modeling device 12. The reading device 10 reads a surface profile of a three-dimensional object to be modeled (hereinafter "target three-dimensional object") and outputs information on the surface profile. Examples of the reading device 10 include a 3D scanner 10. The 3D scanner 10 outputs 3D scanned data as the information on the surface profile.

The information processing device 11 acquires the 3D scanned data from the reading device 10, and executes a processing which specifies modeled object information to be used for the modeling processing. Examples of the information processing device 11 include a 3D model data server 11. The 3D model data server 11 stores multiple 3D model data as multiple modeled object information, and searches the multiple 3D model data to specify 3D model data to be used for the modeling processing. The information processing device 11 outputs the specified 3D model data to the modeling device 12.

The modeling device 12 receives the 3D model data from the information processing device 11 and creates a modeled object based on the 3D model data. Examples of the modeling device 12 include a 3D printer 12. The 3D printer 12 creates a copy of the target three-dimensional object read by the 3D scanner 10 by means of modeling.

The 3D scanner 10, the 3D model data server 11, and the 3D printer 12 may be connected to each other either directly though a cable or via a network such as LAN (Local Area Network) and Internet. The network may be either wired network or wireless network. The modeling processing system may further include other devices, such as an access point, a proxy server, a print server, and a DNS (Domain Name System) server.

The 3D scanner 10 may be either a contact scanner or a non-contact scanner. The 3D scanner 10 illustrated in FIG. 1 is a non-contact scanner. Contact 3D scanners generally include a sensor as hardware. Contact 3D scanners are configured to measure a three-dimensional coordinate of each position on the surface of a target three-dimensional object by being pressed against each position.

Non-contact 3D scanners are of those using laser light and those using pattern light. 3D scanners using laser light generally include a laser light emitter and a sensor. The laser light emitter emits laser light to a target three-dimensional object. The sensor identifies laser light reflected from the three-dimensional object and calculates the distance to each position on the surface of the three-dimensional object by trigonometry. 3D scanners using pattern light generally includes a pattern light emitter and a sensor. The pattern light emitter emits striped pattern light to a target three-dimensional object. The sensor identifies lines composing the striped pattern and calculates the distance to each position on the surface of the three-dimensional object.

The 3D printer 12 may employ any known modeling process such as fused deposition modeling, stereolithography, and binder jetting. Fused deposition modeling is a modeling process in which a heat-melted resin is laid down in layers little by little. Stereolithography is a modeling process in which a liquid resin is irradiated with ultraviolet, etc., to cure little by little. Binder jetting is a modeling process in which a cycle of forming a powder resin into a layer having a specific thickness and applying an adhesive to specific positions on the layer is repeated.

In the modeling processing system illustrated in FIG. 1, the 3D scanner 10, the 3D model data server 11, and the 3D printer 12 are served as independent devices. Alternatively, the 3D scanner 10, the 3D model data server 11, and the 3D printer 12 may be stored in a single casing to be served as a single modeling processing apparatus. Alternatively, two of the above three devices may be stored in a single casing while the other one of the above three devices remaining independent. In this case, the modeling processing system includes independent two devices.

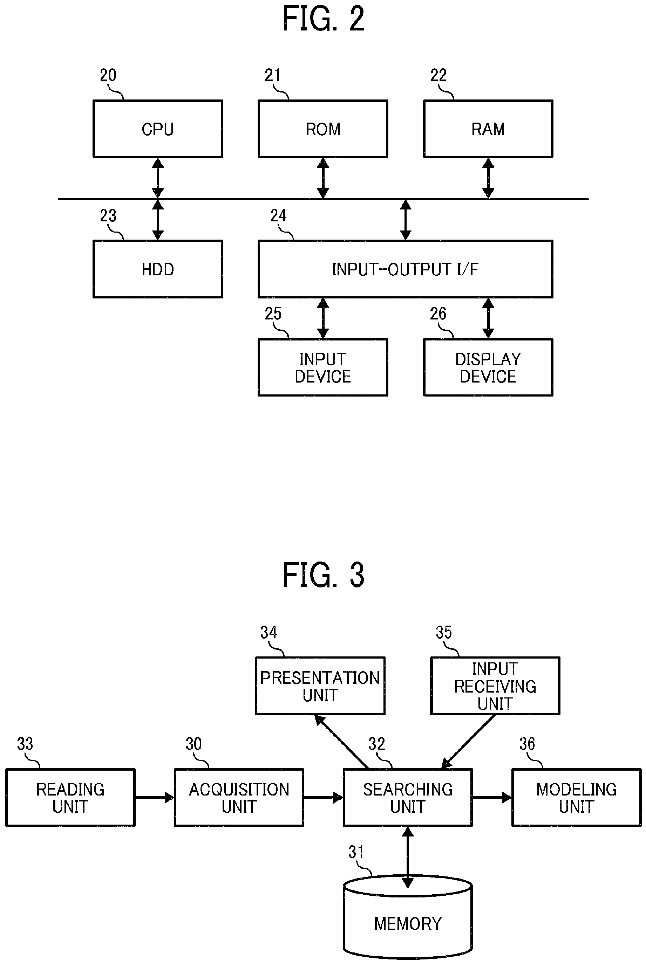

FIG. 2 is a hardware diagram of the 3D model data server 11. Similar to a typical personal computer, the 3D model data server 11 includes a CPU (central processing unit) 20, a ROM (read-only memory) 21, a RAM (random access memory) 22, an HDD (hard disc drive) 23, an input-output I/F 24, an input device 25, and a display device 26.

The CPU 20 controls the whole operation of the 3D model data server 11. The ROM 21 stores boot program for booting the 3D model data server 11 and firmware. The RAM 22 provides a working area for the CPU 20. The HDD 23 stores a program for executing the above-described processing for specifying 3D model data, OS (operating system), and multiple 3D model data.

The input-output I/F 24 is connected to the input device 25, the display device 26, the 3D scanner 10, and the 3D printer 12, to control input and output of data and information. The input device 25, such as a mouse and a keyboard, receives an instruction or information input by a user. The display device 26 displays 3D scanned data and the specified 3D model data.

The 3D model data server 11 may further include other hardware devices, such as a communication I/F for connecting to a network and an external memory I/F for connecting to an external memory. Accordingly, the 3D model data may be stored in either the HDD 23 in the 3D model data server 11 or the external memory accessible by the 3D model data server 11. Alternatively, the 3D model data may be stored in other device or data base which is communicable with the 3D model data server 11 through a network.

FIG. 3 is a functional block diagram of the modeling processing system of FIG. 1 according to a first embodiment of the present invention. The modeling processing system includes at least an acquisition unit 30, a storage unit 31, and a searching unit 32. The modeling processing system illustrated in FIG. 3 further includes a reading unit 33, a presentation unit 34, an input receiving unit 35, and a modeling unit 36. The acquisition unit 30 and the searching unit 32 are implemented as the CPU 20 executes the above-described program. The storage unit 31 is implemented by any desired memory such as the HDD 23. For simplicity, in this disclosure, the storage unit 31 is referred to as the memory 31. The presentation unit 34 is implemented by the display device 26. The input receiving unit 35 is implemented by the input device 25. The reading unit 33 is implemented by the 3D scanner 10. The modeling unit 36 is implemented by the 3D printer 12.

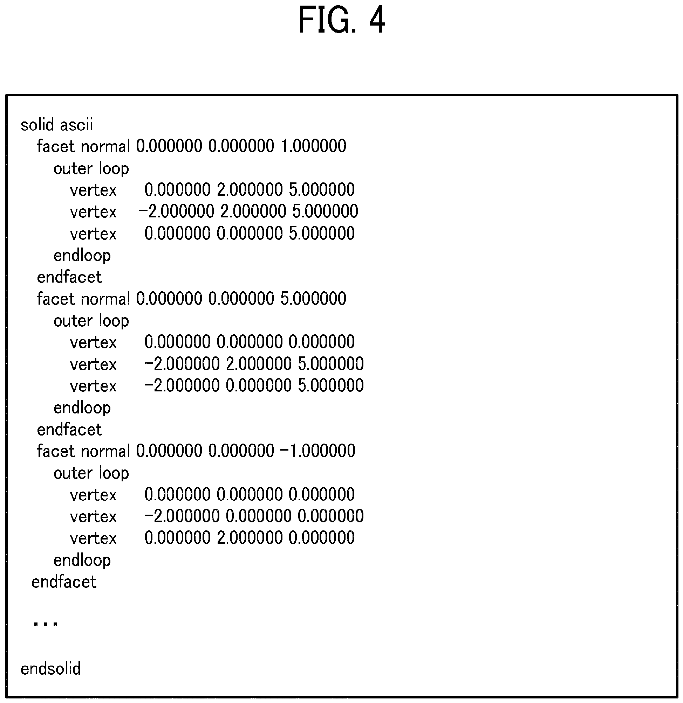

The reading unit 33 reads a surface profile of a target three-dimensional object and outputs information on the surface profile as 3D scanned data. The acquisition unit 30 acquires the 3D scanned data output from the reading unit 33. The 3D scanned data may be in the form of aggregated data of a triangle, in which the three-dimensional position (coordinate) of each vertex is specified, such as STL (standard triangulated language) illustrated in FIG. 4.

In the scanned data expressed by STL, as illustrated in FIG. 4, a series of data listed from "facet" to "endfacet" represent data of one triangle, "normal" represents the normal vector of the triangle, and each of three "vertex"s represents the position of each vertex of the triangle. By repeatedly writing such data of the triangle, the three-dimensional shape is expressed. Not only 3D scanned data but also 3D model data can be expressed by the above-described manner.

The memory 31 stores multiple modeled object information, each including surface profile information and internal structure information, as multiple 3D model data. While the 3D scanned data acquired by the acquisition unit 30 includes information on the surface profile only, 3D model data stored in the memory 31 includes both surface profile information and internal structure information.

The searching unit 32 searches the multiple 3D model data stored in the memory 31 to specify 3D model data to be used for the modeling processing, based on the 3D scanned data acquired by the acquisition unit 30. In particular, the searching unit 32 extracts some of the multiple 3D model data, each of which including surface profile information similar to the surface profile of the 3D scanned data. Among the extracted 3D model data, one having surface profile information most similar to the surface profile of the 3D scanned data is specified as 3D model data to be used for the modeling processing.

The presentation unit 34 displays a search result made by the searching unit 32. The presentation unit 34 is capable of displaying both the 3D scanned data acquired by the acquisition unit 30 and the 3D model data specified by the searching unit 32. The presentation unit 34 is capable of displaying multiple 3D model data. A user instructs execution of the modeling processing based on the 3D model data displayed by the presentation unit 34. The input receiving unit 35 receives the execution instruction and causes the searching unit 32 to output the specified 3D model data to the modeling unit 36.

The modeling unit 36 executes the modeling processing based on the 3D model data output from the searching unit 32. Since the 3D model data includes internal structure information, the modeling unit 36 creates a modeled object reflecting the internal structure information. For example, when the internal structure information includes hollow structure information, a hollow object will be modeled.

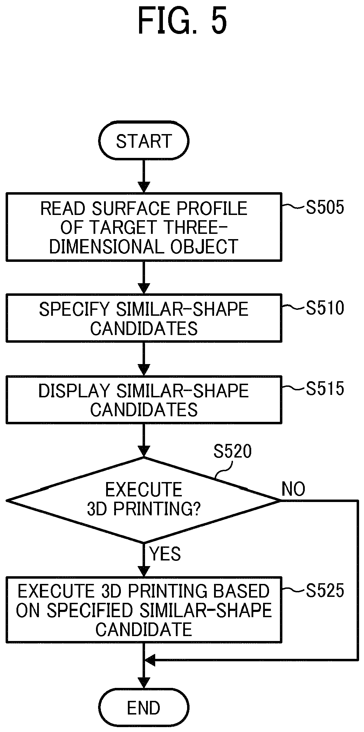

FIG. 5 is a flowchart of a processing executed by the modeling processing system illustrated in FIG. 3. In step 505, the reading unit 33 reads a surface profile of a target three-dimensional object (i.e., the three-dimensional object is three-dimensionally scanned). The reading unit 33 then outputs information on the read surface profile of the three-dimensional object as 3D scanned data. The acquisition unit 30 acquires the 3D scanned data. In step 510, the searching unit 32 searches the multiple 3D model data stored in the memory 31 to specify similar-shape candidate 3D model data to be used for the modeling processing.

In step 515, the presentation unit 34 displays on a screen the similar-shape candidate 3D model data to be used for the modeling processing, specified by the searching unit 32, to present the similar-shape candidate 3D model data to a user. The user takes a look at the displayed 3D model data and determines whether to instruct execution of the modeling processing or not. The user needs not instruct execution of the modeling processing when no appropriate data is displayed. When no appropriate data is displayed, the user may instruct stop of the modeling processing. In step 520, the input receiving unit 35 receives an execution instruction or a stop instruction, and determines whether to execute the modeling processing or not.

When it is determined in step 520 to execute the modeling processing, the modeling unit 36 executes 3D printing based on the 3D model data specified in step 525, to create a modeled object. When it is determined in step 520 not to execute the modeling processing, the modeling processing is canceled, and the whole processing is ended.

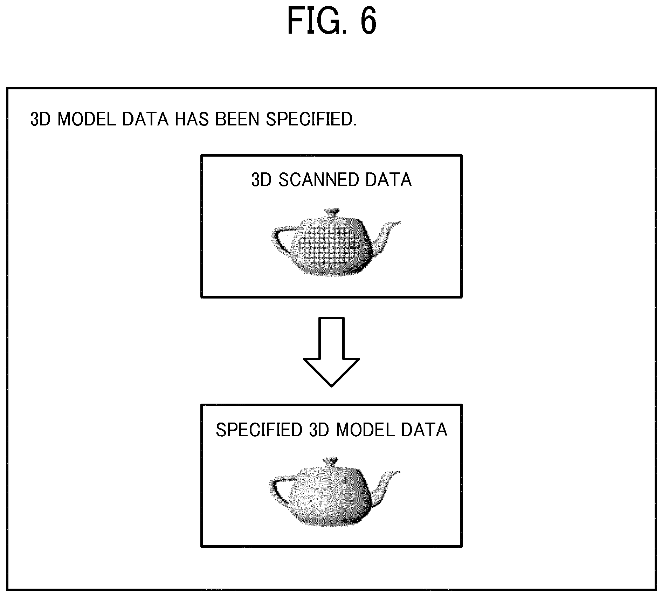

FIG. 6 is an illustration of a screen displayed by the presentation unit 34. On the screen illustrated in FIG. 6, both the 3D scanned data acquired by the acquisition unit 30 and the 3D model data specified by the searching unit 32 are displayed for comparison. Alternatively, the 3D scanned data and the 3D model data may be displayed separately, or only the 3D model data may be displayed.

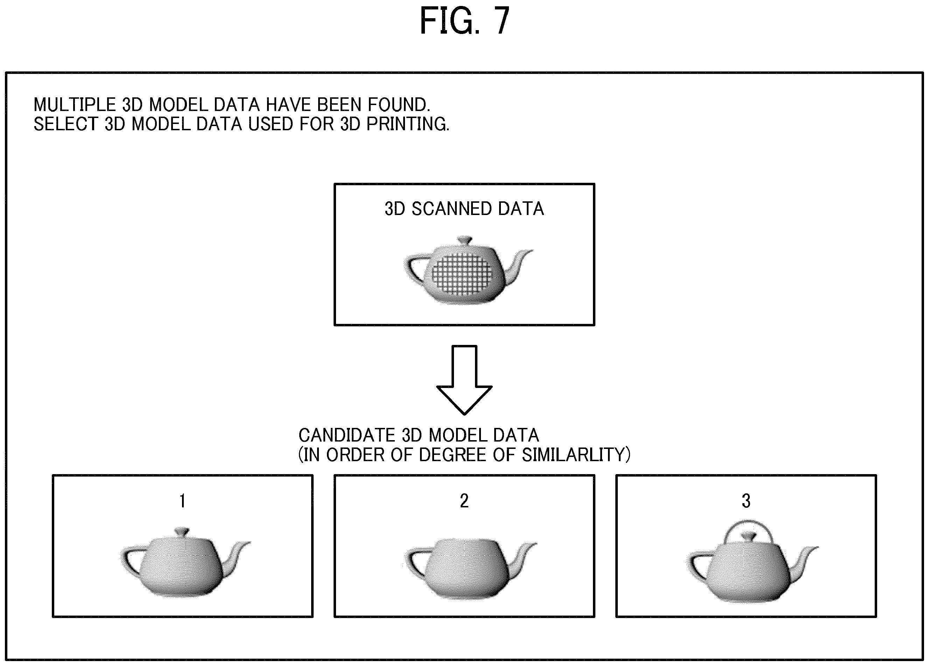

FIG. 7 is another illustration of a screen displayed by the presentation unit 34. In the example illustrated in FIG. 7, the searching unit 32 has specified multiple similar-shape candidate 3D model data. The multiple similar-shape candidate 3D model data are displayed on the screen along with the 3D scanned data. Whether each of the multiple 3D model data is specified as a similar-shape candidate is determined based on the degree of similarity, which is a numerical parameter. When the degree of similarity is equal to or greater than a threshold, the 3D model data is specified as a similar-shape candidate. In the example illustrated in FIG. 7, the similar-shape candidate 3D model data are displayed in the order of degree of similarity.

The searching unit 32 searches the multiple 3D model data stored in the memory 31 to specify some of the 3D model data which have the degree of similarity equal to or greater than the threshold, and presents the specified 3D model data to the user. The number of 3D model data to be presented is determined based on the threshold. The threshold may be a fixed value retained by the modeling processing system.

The degree of similarity between the surface profile of the three-dimensional object expressed by the 3D scanned data and that of a modeled object expressed by the 3D model data can be determined by any known method. For example, the degree of similarity can be numerically determined by means of cluster analysis, k-nearest neighbors algorithm, and multi dimensional scaling (MDS), all of which are well known.

The user selects one of the similar-shape candidate 3D model data displayed in the order of degree of similarity, and instructs execution of the modeling processing based on the selected data. The input receiving unit 35 receives information on the selected data and the execution instruction, and outputs the information to the modeling unit 36. The modeling unit 36 receives the execution instruction and creates a modeled object based on the received data.

In the present embodiment, both the 3D scanned data and the 3D model data are displayed for comparison. Alternatively, the 3D scanned data and the multiple 3D model data may be displayed separately, or only the multiple 3D model data may be displayed. The multiple 3D model data may be displayed in the order other than the degree of similarity.

The modeling processing system according to the present embodiment is capable of creating a modeled object which reflects the features of the target three-dimensional object, even in a case in which the features include those incapable of being extracted by the 3D scanner 10. In a case in which there is no target object to create, execution of the modeling processing can be canceled. In addition, since multiple similar-shape candidate 3D model data are displayed, the user can select a desired data with a high degree of freedom.

The threshold may be either a fixed value or a variable value that can be displayed and varied upon user's request. The presentation unit 34 can display the set threshold. The input receiving unit 35 can accept a change in the threshold and set the threshold according to the change. Since the threshold is variable, a desired 3D model data can be selected with a high degree of freedom.

The modeling processing system according to the present embodiment is capable of creating a modeled object which reflects the features of the target three-dimensional object, even in a case in which the features include those incapable of being extracted by the 3D scanner 10, as described above. However, when there are multiple 3D model data equivalent in surface profile information or degree of similarity but different in internal structure information, this modeling processing system is unable to determine which one of the multiple 3D model data is to be used for the modeling processing. Moreover, there may be 3D model data which will be determined to be most similar when the inner structure information thereof is taken into consideration but will not when only the surface profile information thereof is taken into consideration. Thus, this modeling processing system may be relatively low in accuracy in reproducing the features.

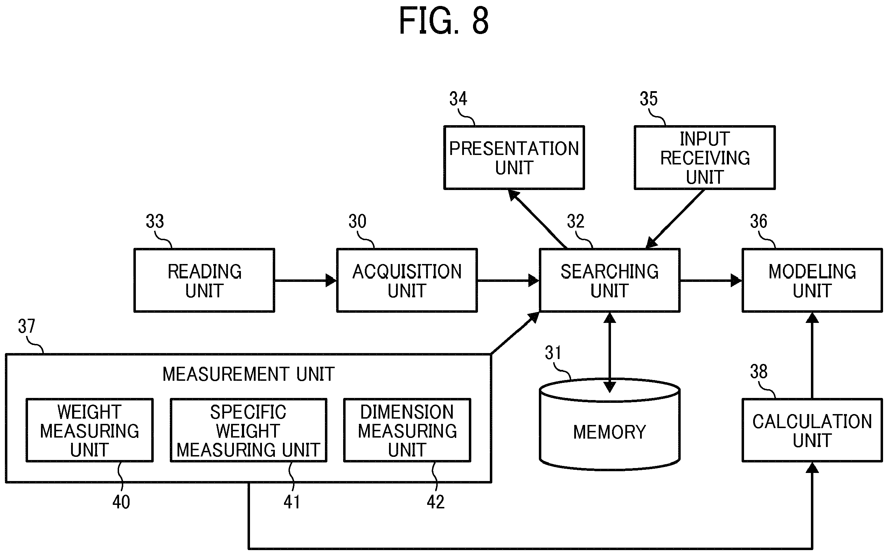

To more improve the accuracy in reproducing the features of a target three-dimensional object, in another embodiment, a modeling processing system illustrated in FIG. 8 is provided. The modeling processing system illustrated in FIG. 8 includes a measurement unit 37 and a calculation unit 38, in addition to the functional units included in the modeling processing system illustrated in FIG. 3. The measurement unit 37 includes a weight measuring unit 40, a specific gravity measuring unit 41, and a dimension measuring unit 42. The weight is varied as the inner structure is varied. Therefore, variation in inner structure can be determined based on variation in weight. The measurement unit 37 and the calculation unit 38 are described in detail below.

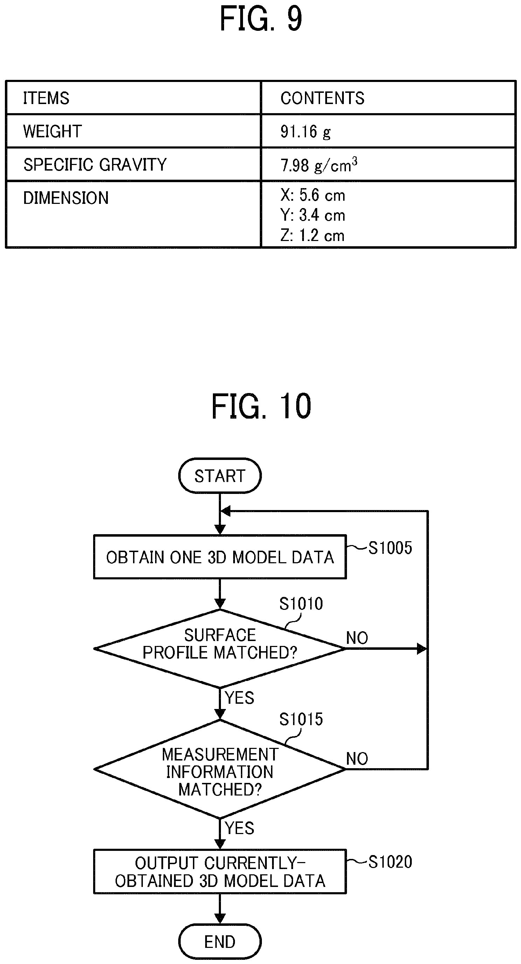

The measurement unit 37 measures the weight, specific gravity, and dimension of a target three-dimensional object, and the searching unit 32 acquires these data as measurement information, as illustrated in FIG. 9. The measurement information are not limited to the items listed in the table illustrated in FIG. 9. The measurement unit 37 may measure other items and acquire other measurement information. In the present embodiment, the measurement information is acquired by the searching unit 32. Alternatively, according to another embodiment, the measurement information may be acquired by the acquisition unit 30. The weight measuring unit 40 measures the weight of the three-dimensional object. Examples of the weight measuring unit 40 include a balance. The specific gravity measuring unit 41 measures the specific gravity of the material composing the three-dimensional object. Examples of the specific gravity measuring unit 41 include a sensor. The dimension measuring unit 42 measures the dimension of the three-dimensional object. The format of the dimension is not limited to a particular format so long as the size of the three-dimensional object is expressed. Examples of the dimension measuring unit 42 include a 3D scanner.

In place of providing the measurement unit 37 illustrated in FIG. 8, it is possible that the input receiving unit 35 provides an input screen to a user, to allow the user to input measurement information, and receives the input measurement information.

The calculation unit 38 calculates the dimensional ratio between the dimension of the target three-dimensional object and that of a modeled object expressed by the 3D model data. The dimensional ratio is used when creating a modeled object having the same shape and dimension as the target three-dimensional object by means of magnification or reduction.

The searching unit 32 searches the multiple 3D model data stored in the memory 31 to specify 3D model data to be used for the modeling processing. The search is based on the threshold. The determination is made based on whether the degree of similarity is equal to or greater than the threshold. Specifically, when the degree of similarity between the surface profile of the three-dimensional object expressed by the 3D scanned data and that of a modeled object expressed by each 3D model data is equal to or greater than the threshold, the 3D model data is specified as data to be used for the modeling processing.

There may be a case in which multiple 3D model data are specified, and two or more of the specified 3D model data have the same surface profile information. In this case, which one of the two or more of the specified 3D model data having the same surface profile information is to be used for the modeling processing is determined based on the measurement information measured by the measurement unit 37. Even when the surface profile information is the same, the weight varies depending on whether the inner structure is hollow or not. Even when the weight is the same, the volume or dimension varies.

Thus, use of the measurement information measured by the measurement unit 37 makes it possible to reproduce the target three-dimensional object with a higher degree of accuracy. In addition, use of the dimensional ratio calculated by the calculation unit 38 makes it possible to create a modeled object having substantially the same dimension as the target three-dimensional object.

FIG. 10 is a flowchart of a processing for specifying 3D model data, executed by the modeling processing system illustrated in FIG. 8. In step 1005, the searching unit 32 obtains one 3D model data from the memory 31.

In step 1010, the searching unit 32 executes a matching processing that determines whether the surface profile of the three-dimensional object expressed by the 3D scanned data and that of a modeled object expressed by the obtained 3D model data are matched or not. In particular, the matching processing determines whether or not the degree of similarity between the surface profile of the three-dimensional object expressed by the 3D scanned data and that of the modeled object expressed by the obtained 3D model data is equal to or greater than the threshold. When the degree of similarity is equal to or greater than the threshold, the three-dimensional object expressed by the 3D scanned data and the modeled object expressed by the obtained 3D model data are determined to be matched in surface profile, and the processing proceeds to step 1015. When the three-dimensional object expressed by the 3D scanned data and the modeled object expressed by the obtained 3D model data are determined not to be matched in surface profile, the processing returns to step 1005 to obtain next 3D model data.

In step 1015, whether the weight and volume of the three-dimensional object expressed by the 3D scanned data and those of the modeled object expressed by the obtained 3D model data are matched or not is determined based on the measurement information. In this step, two or more of the 3D model data each having different inner structure information but the same surface profile information, if any, are distinguished from each other. This makes it possible to reproduce the target three-dimensional object with a high degree of accuracy especially when the three-dimensional object has its feature in inner structure. When the three-dimensional object expressed by the 3D scanned data and the modeled object expressed by the obtained 3D model data are determined to be matched in the measurement information, the processing proceeds to step 1020. When the three-dimensional object expressed by the 3D scanned data and the modeled object expressed by the obtained 3D model data are determined not to be matched in the measurement information, the processing returns to step 1005 to obtain next 3D model data.

In step 1020, the 3D model data currently obtained from the memory 31 is determined to be a desired data, since this 3D model data and the 3D scanned data are determined to be matched in terms of both surface profile information and measurement information. The currently-obtained 3D model data is output and the processing is ended.

After the 3D model data has been specified, the modeling unit 36 may create a modeled object, or alternatively, the presentation unit 34 may display the specified 3D model data to a user to allow the user to confirm the specified 3D model data. In the latter case, when the user accepts the specified 3D model data, the user may press "OK" button displayed on the screen to instruct execution of the modeling processing based on the specified 3D model data. In response to the execution instruction, the modeling unit 36 may create a modeled object based on the 3D model data.

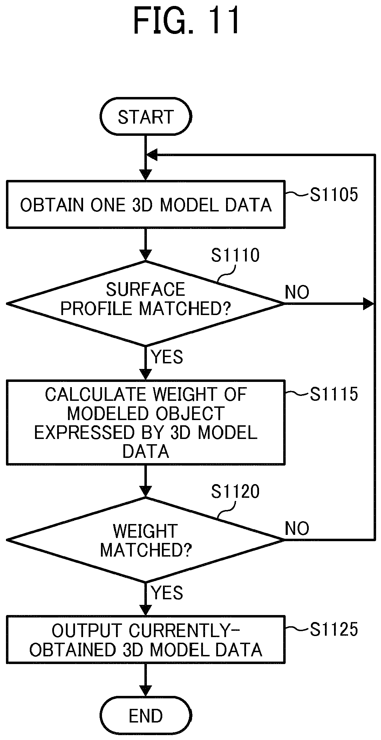

Details of the above processing when 1) weight is used as the measurement information, 2) specific gravity is used as the measurement information, 3) dimension is used as the measurement information, 4) the dimensional ratio is calculated, and 5) multiple candidate 3D model data are specified, are described below with reference to FIGs. 11 to 15, respectively. FIG. 11 is a flowchart of a processing in which weight is used as the measurement information. Steps 1105 and 1110 are equivalent to steps 1005 and 1010 in FIG. 10, respectively.

In step 1115, the weight of the modeled object expressed by the obtained 3D model data is calculated. Calculation of the weight may be performed by the calculation unit 38. The weight of the modeled object may be calculated from the amount of the raw material used for creating the modeled object. More specifically, first, slice data of each layer to be laminated is created from the 3D model data. The amount of the raw material used in each layer is calculated from the area of each layer and the specific gravity of the raw material held by the modeling processing system. The weight of the modeled object is calculated by totaling the amount of the raw material used in each layer. The calculation is not limited to the above-described procedure.

In step 1120, whether the weight of the target three-dimensional object, measured by the measurement unit 37, and that of the modeled object expressed by the obtained 3D model data, calculated in step 1115, are matched or not is determined by the searching unit 32. The target three-dimensional object and the modeled object expressed by the obtained 3D model data are determined to be matched in weight when the weight difference therebetween is within a predetermined range. Step 1125 is equivalent to step 1020 in FIG. 10.

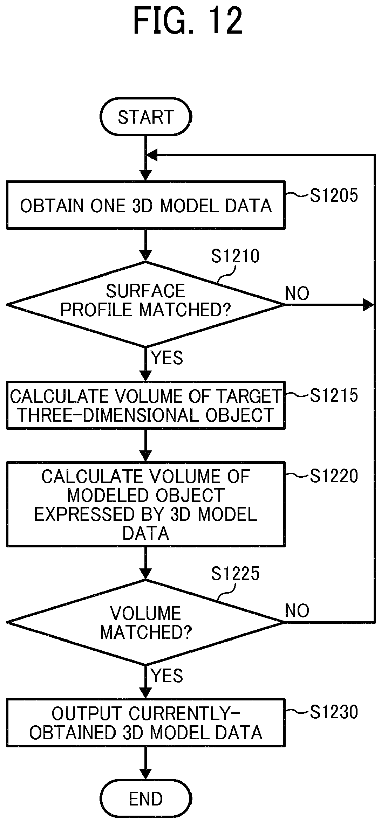

FIG. 12 is a flowchart of a processing in which specific gravity is used as the measurement information. Steps 1205 and 1210 are equivalent to steps 1005 and 1010 in FIG. 10, respectively, and steps 1105 and 1110 in FIG. 11, respectively.

In step 1215, the volume of the target three-dimensional object is calculated from the weight and specific gravity thereof measured by the measurement unit 37. Calculation of the volume of the target three-dimensional object may be performed by the calculation unit 38. The volume of the target three-dimensional object may be calculated by dividing the measured weight by the measured specific gravity. In step 1220, the volume of the modeled object expressed by the obtained 3D model data is calculated. Calculation of the volume of the modeled object expressed by the obtained 3D model data may also be performed by the calculation unit 38. The volume of the modeled object expressed by the obtained 3D model data may be calculated from the three-dimensional shape of the modeled object.

In step 1225, whether the calculated volume of the target three-dimensional object and the calculated volume of the modeled object expressed by the obtained 3D model data are matched or not is determined by the searching unit 32. The target three-dimensional object and the modeled object expressed by the obtained 3D model data are determined to be matched in volume when the volume difference therebetween is within a predetermined range. Step 1230 is equivalent to step 1020 in FIG. 10 and step 1125 in FIG. 11.

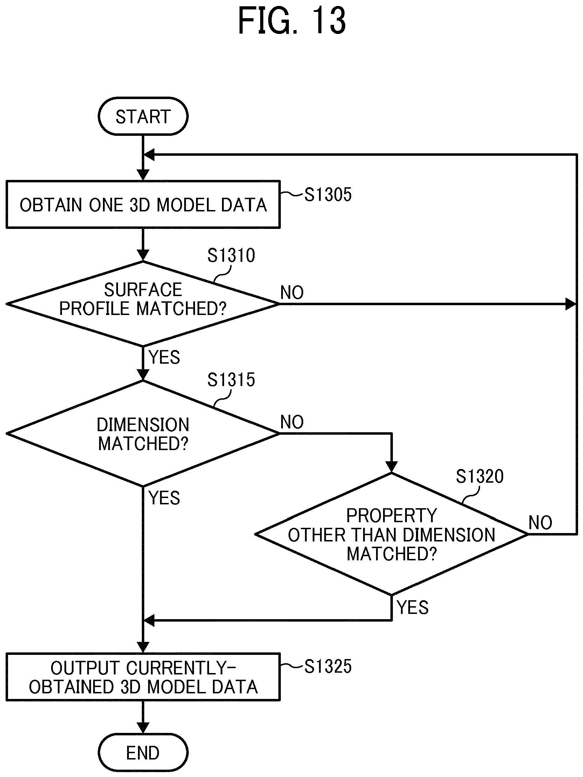

FIG. 13 is a flowchart of a processing in which dimension is used as the measurement information. Steps 1305 and 1310 are equivalent to steps 1005 and 1010 in FIG. 10, respectively. When the target three-dimensional object and the modeled object expressed by the obtained 3D model data are determined to be matched in dimension in step 1315, the processing proceeds to step 1320. When the target three-dimensional object and the modeled object expressed by the obtained 3D model data are determined not to be matched in dimension in step 1315, the processing proceeds to step 1325.

In step 1320, whether the target three-dimensional object and the modeled object expressed by the obtained 3D model data are matched or not is determined by the searching unit 32 in terms of a property other than dimension. When the target three-dimensional object and the modeled object expressed by the obtained 3D model data are determined not to be matched, the processing returns to step 1305 to obtain next 3D model data. When the target three-dimensional object and the modeled object expressed by the obtained 3D model data are determined to be matched, the processing proceeds to step 1325, and the 3D model data currently obtained is determined to be a desired data, in the same manner as in step 1020. The currently-obtained 3D model data is output and the processing is ended.

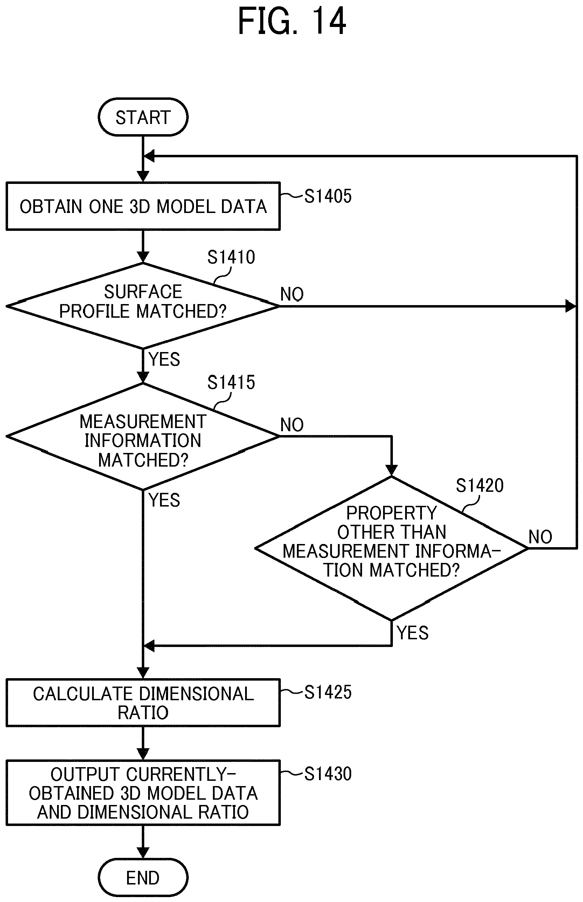

FIG. 14 is a flowchart of a processing in which the dimensional ratio is calculated. Steps 1405 and 1410 are equivalent to steps 1305 and 1310 in FIG. 13, respectively. In step 1415, whether the target three-dimensional object and the modeled object expressed by the obtained 3D model data are matched or not is determined in terms of the measurement information. In step 1420, whether the target three-dimensional object and the modeled object expressed by the obtained 3D model data are matched or not is determined in terms of a property other than the measurement information. In step 1425, the ratio between the dimension of the three-dimensional object expressed by the 3D scanned data and that of the modeled object expressed by the obtained 3D model data, i.e., the dimensional ratio, is calculated. In step 1430, the 3D model data currently obtained is determined to be a desired data. The currently-obtained 3D model data and the dimensional ratio are output and the processing is ended.

In the example illustrated in FIG. 14, the measurement information used for the determination may include any one of weight, specific gravity, and dimension, or any combination thereof. Alternatively, the measurement information may include other properties.

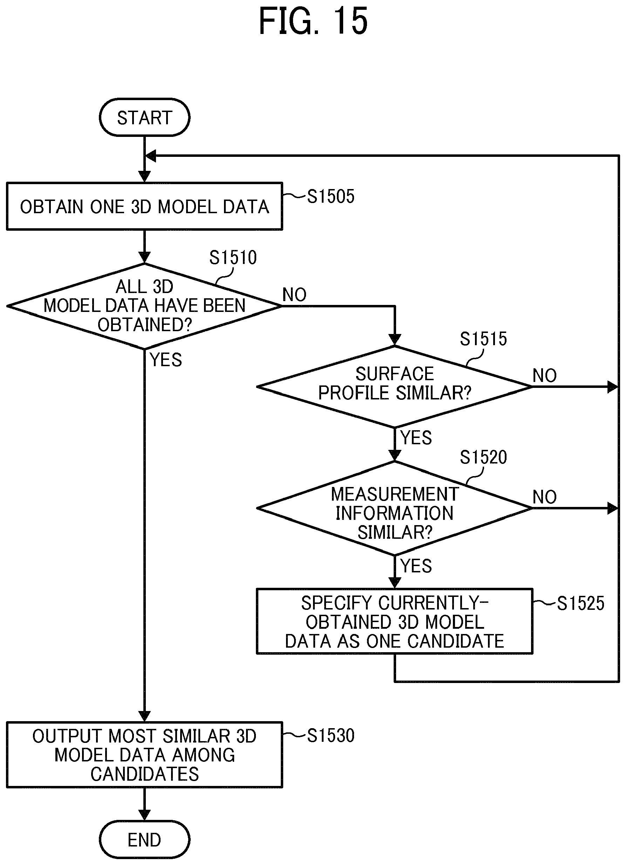

FIG. 15 is a flowchart of a processing in which multiple candidate 3D model data are specified. Among multiple 3D model data stored in the memory 31, the number of data having a degree of similarity which is equal to or greater than the threshold is not always one.

Step 1505 is equivalent to step 1005 in FIG. 10. In step 1510, whether all the 3D model data stored in the memory 31 have been obtained or not is determined. When all the 3D model data have not been obtained, the processing proceeds to step 1515. When all the 3D model data have been obtained, the processing proceeds to step 1530.

In step 1515, whether the surface profile of the three-dimensional object expressed by the 3D scanned data and that of the modeled object expressed by the obtained 3D model data are similar or not is determined by the searching unit 32. The determination is made based on whether the degree of similarity is equal to or greater than the threshold. The format of the degree of similarity is not limited to a particular format. For example, the degree of similarity may be expressed in percentage. In this case, the determination is made based on whether the percentage is equal to or greater than the threshold. When the three-dimensional object expressed by the 3D scanned data and the modeled object expressed by the obtained 3D model data are determined to be similar, the processing proceeds to step 1520. When the three-dimensional object expressed by the 3D scanned data and the modeled object expressed by the obtained 3D model data are determined not to be similar, the processing returns to step 1505 to obtain next 3D model data.

In step 1520, whether the measurement information of the target three-dimensional object and that of the modeled object expressed by the obtained 3D model data are similar or not is determined by the searching unit 32. The determination is made based on whether the degree of similarity is equal to or greater than the threshold, in the same manner as in step 1515. The threshold used in step 1520 may be either the same as or different from that used in step 1515. When the three-dimensional object expressed by the 3D scanned data and the modeled object expressed by the obtained 3D model data are determined to be similar in step 1520, the processing proceeds to step 1525. When the three-dimensional object expressed by the 3D scanned data and the modeled object expressed by the obtained 3D model data are determined not to be similar in step 1520, the processing returns to step 1505 to obtain next 3D model data.

In step 1525, the currently-obtained 3D model data is determined to be one candidate, since both the surface profile information and measurement information thereof are determined to be similar to those of the target three-dimensional object, and temporarily stored in the memory 31. The process returns to step 1505 to obtain next 3D model data.

In step 1530, since all the multiple 3D model data stored in the memory 31 have been already obtained, one of the 3D model data temporarily stored in the memory 31 which has the highest degree of similarity is extracted. It is possible that each 3D model data is associated with the degree of similarity when stored in the memory 31. Since the degree of similarity is calculated in terms of either surface profile information or measurement information, one of the 3D model data which has the highest degree of similarity in terms of both surface profile information and measurement information is extracted. The extracted 3D model data is output and the processing is ended.

After the 3D model data is output to the modeling unit 36, the 3D model data temporarily stored in the memory 31 can be deleted. In this case, the measurement information may include any one of weight, specific gravity, and dimension, or any combination thereof. Alternatively, the measurement information may include other properties. It is also possible that the processing includes a step of calculating the dimensional ratio. In this case, the 3D model data along with the dimensional data are output to the modeling unit 36, and the modeling unit 36 creates a modeled object by means of magnification and reduction using the dimensional ratio.

The above-described processings can improve the accuracy in specifying 3D model data. Even when the dimension of the modeled object expressed by the 3D model data is different from that of the target three-dimensional object, a modeled object having the same dimension as the target three-dimensional object can be created by the above processings. Even when multiple candidate 3D model data have found, one of the multiple candidate 3D model data which creates a modeled object most similar to the target three-dimensional object can be specified.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A modeling processing system, comprising:
an acquisition unit (30) to acquire information on a surface profile of a target three-dimensional object from a reading unit (33), the target three-dimensional object being a target for a modeling processing;
a memory (31) to store, for a plurality of modeled objects, a plurality of modeled object information each modeled object information including surface profile information and internal structure information of the modeled object; and
a searching unit (32) to specify, from among the plurality of modeled object information stored in the memory (31), at least one of the plurality of modeled object information based on the information on the surface profile of the target three-dimensional object acquired by the acquisition unit (30), as a candidate modeled object information for the modeling processing.

2. The modeling processing system of claim 1, wherein the searching unit (32) is configured to:
determine, for each one of the plurality of modeled object information stored in the memory (31), whether or not a degree of similarity between the surface profile of the target three-dimensional object and the surface profile information included in the each one of the plurality of modeled object information is equal to or more than a threshold to generate a determination result, and
specify the candidate modeled object information based on the determination result.

3. The modeling processing system of claim 1 or 2, further comprising:
a display (34; 26) to display to a user the candidate modeled object information for the modeling processing; and
an input receiving unit (35; 25) to receive from the user an execution instruction for executing the modeling processing or a cancellation instruction for cancelling the modeling processing,
wherein, in response to receiving the execution instruction, the searching unit (32) outputs the candidate modeled object information for the modeling processing to a modeling unit (36) to instruct the modeling unit (36) to create a modeled object based on the candidate modeled object information.

4. The modeling processing system of claim 2, further comprising:
a display (34; 26) to display the threshold in response to a request from the user; and
an input receiving unit (35; 25) to accept a change in the threshold from the user,
wherein the searching unit (32) determines the degree of similarity based on the threshold that is changed by the user.

5. The modeling processing system of claim 4, wherein, when the candidate modeled object information includes two or more candidate modeled object information, the display (34; 26) displays the two or more candidate modeled object information, and the input receiving unit (35; 25) accepts a selection of one of the two or more candidate modeled object information to be used for the modeling processing.

6. The modeling processing system of any one of claims 1 to 5,
wherein the searching unit (32) acquires information on a measurable property of the target three-dimensional object from a measurement unit (37), and
wherein the searching unit (32) specifies the candidate modeled object information for the modeling processing, based on the measurable property of the target three-dimensional object in addition to the information on the surface profile.

7. The modeling processing system of claim 6, further comprising:
a calculation unit (38) to calculate a dimensional ratio and to output the dimensional ratio to a modeling unit (36) that creates a modeled object based on the candidate modeled object information,
the dimensional ratio being a ratio between a dimension of the target three-dimensional object, measured by the measurement unit (37), and another dimension of the modeled object to be created by the modeling unit (36), included in the candidate modeled object information.

8. The modeling processing system of claim 6, further comprising the measurement unit (37) to measure the measurable property of the target three-dimensional object.

9. The modeling processing system of any one of claims 1 to 8, further comprising:
the reading unit (33) to read the surface profile of the target three-dimensional object; and
a modeling unit (36) to create a modeled object based on the candidate modeled object information.

10. A method of executing a modeling processing, comprising:
acquiring information on a surface profile of a target three-dimensional object from a reading unit, the target three-dimensional object being a target for a modeling processing;
storing in a memory, for a plurality of modeled objects, a plurality of modeled object information each modeled object information including surface profile information and internal structure information of the modeled object; and
specifying, from among the plurality of modeled object information stored in the memory, at least one of the plurality of modeled object information based on the information on the surface profile of the target three-dimensional object, as a candidate modeled object information for the modeling processing.

11. The method of claim 10, further comprising:
creating a modeled object based on the candidate modeled object information.

12. A carrier means carrying computer readable code for controlling one or more computers to carry out the method of claim 10 or 11.
